# EUROPÄISCHE PATENTSCHRIFT

(11) **EP 3 613 683 B1**
(45) Veröffentlichungstag und Bekanntmachung des Hinweises auf die Patenterteilung: **03.08.2022**
(21) Anmeldenummer: 18190332.9
(22) Anmeldetag: 22.08.2018
(51) Int. Cl.: B65G 47/86

(54) **GREIFEREINHEIT**
GRIPPER UNIT
UNITÉ DE PRÉHENSION

(43) Veröffentlichungstag der Anmeldung: 26.02.2020
(73) Patentinhaber: Kematec Kellereitechnik GmbH, 79331 Teningen (DE)
(72) Erfinder: DAGES, Erwin, 79331 Teningen (DE)
(74) Vertreter: LBP Lemcke, Brommer & Partner Patentanwälte mbB

(56) Entgegenhaltungen:
- EP-A1- 2 186 759
- EP-A1- 3 239 078
- DE-A1- 1 482 616
- DE-A1-102008 050 492
- DE-A1-102012 108 087
- DE-A1-102014 111 564

## Beschreibung

Die Erfindung betrifft eine Greifereinheit nach dem Oberbegriff des Anspruchs 1. Ferner betrifft die Erfindung eine Vorrichtung mit einer Greifereinheit gemäß dem Oberbegriff des Anspruchs 12.

Es sind Greifereinheiten bekannt, die zum Handhaben von Gegenständen wie Containern in der Massenproduktion eingesetzt werden. Solche Greifereinheiten greifen den Gegenstand an einem Ort und transportieren ihn zu einem anderen Ort. Außerdem werden die Gegenstände bearbeitet, während sie durch die Greifereinheit fixiert sind. Beispielsweise wird ein gegriffener Container, insbesondere eine Flasche, mit einem Stoff befüllt. Insbesondere in der Lebensmittelabfüllungsindustrie sind solche Greifereinheiten besonders bevorzugt eigesetzt, da sie maßgeblich zur Verarbeitungsgeschwindigkeitserhöhung beitragen können. Ferner werden Transferstraßen mit Greifereinheiten umfassenden Handhabungsvorrichtungen ausgestattet.

Zum Greifen eines Gegenstandes ist die Greiferheinheit mit beweglichen Greifern ausgestattet, die durch eine angeschlossene Mechanik bewegt werden. Die Mechanik ist maßgeblich für die Greifgeschwindigkeit verantwortlich und bestimmt die Taktgeschwindigkeit der Handhabung der Gegenstände. Unterschiedliche herkömmliche Greifereinheiten sind im Stand der Technik vorgeschlagen.

In der EP2138434 B1 ist eine Greifereinheit zur Handhabung von Gegenständen mit einem Träger und einer Halterung mit darauf angeordneten beweglichen Greifern offenbart, die mit einem Gleitstück verbunden sind. Das Gleitstück dient als Antriebsmittel und ist in Form eines Kolbens kinematisch mit den Greifern indirekt über ein dazwischengeschaltetes Gestänge verbunden. Durch das Gestänge wird eine Vertikalbewegung des Kolbens in eine Horizontalbewegung des Gleitstücks umgewandelt. Somit ist ein komplizierter und vielteiliger Aufbau für die Greifereinheit nötig. Solch eine Greifereinheit ist aufgrund ihrer Vielteiligkeit aus wirtschaftlicher Sicht nachteilig als auch aus technischer Sicht wenig praktikabel, da die Vorrichtung zu Fehlfunktionen neigt.

Die JP4554341 B2 lehrt eine Greifereinheit für Flaschen in einer Rotationsförderanlage. Die Greifereinheit umfasst die Flaschen an drei Punkten, indem sie eine Hauptbefestigungsplatte und zwei Greifer aufweist. Die Hauptbefestigungsplatte ist über eine Feder und Drehgelenken mit den Greifern kinematisch verbunden. Diese Druckschrift lehrt ebenso eine komplizierte und wenig effiziente Vorrichtung, der die Möglichkeit abkommt, hohe Taktzeiten in der Rotationsförderanlage zu realisieren. Ferner ist der komplizierte Aufbau der Greifereinheit störungsanfällig und kostenintensiv.

Die DE 10 212 108 087 A1 offenbart eine Greifereinheit zum Greifen eines Gegenstands, nach dem Oberbegriff des Anspruchs 1, die zwei Greifer umfasst. Die zwei Greifer weisen viertelkreisförmige Halteabschnitte auf, die eine Öffnung umschließen, in welche der Gegenstand bei seinem Ergreifen aufgenommen werden kann. Aufgrund dieser viertelkreisförmigen Halteabschnitte kann die Greifereinheit nur Gegenstände mit kreisförmigem Querschnitt und definiertem Durchmesser sicher ergreifen. Die Einsetzbarkeit dieser Greifereinheit ist daher begrenzt.

Aus der EP 2 186 759 A1 geht ebenfalls eine Greifereinheit hervor. Diese Greifereinheit ermöglicht zwar die Fixierung von Gegenständen mit unterschiedlichem Querschnitt und Durchmesser. Hierfür weist die Greifereinheit jedoch zwei Paare von übereinander angeordneten Greifern auf, um den Gegenstand sicher zu fixieren. Dies wirkt sich negativ auf die Anzahl an benötigten Bauteilen der Greifereinheit aus.

Die DE 1 482 616 A1 beschreibt eine Greifereinheit mit zwei Greifern. Diese sind jedoch derart gebogen ausgebildet, dass von den Greifern ebenfalls nur Gegenstände mit kreisförmigem Querschnitt und definiertem Durchmesser ergriffen werden können. Die Einsetzbarkeit dieser Greifereinheit ist daher ebenfalls begrenzt.

Wenngleich die bekannten Greifereinheiten ihre Funktion erfüllen, bietet der Bereich der Greifereinheiten für Gegenstände und Vorrichtungen mit solchen Greifereinheiten noch Raum für Verbesserungen.

Der Erfindung liegt die Aufgabe zugrunde, eine Greifereinheit für Gegenstände bereitzustellen, die mit wenigen Bauteilen ausgeführt ist und ausfallfrei geringe Taktzeiten erlaubt. Ferner besteht die Aufgabe darin, eine Vorrichtung bereitzustellen, die es ermöglicht Gegenstände mit hohen Taktzeiten zu handhaben.

Erfindungsgemäß wird die Aufgabe durch eine Greifereinheit für Gegenstände mit den Merkmalen des Anspruchs 1 gelöst. Die Aufgabe wird ferner durch eine Vorrichtung mit solchen Greifereinheiten für Gegenstände gemäß Anspruch 12 gelöst. Vorteilhafte Ausgestaltungen und Weiterbildungen der Erfindung ergeben sich aus den abhängigen Ansprüchen.

Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Die erfindungsgemäße Greifereinheit zum Greifen eines Gegenstands, insbesondere eines Containers, bevorzugt einer Flasche, umfasst zwei Greifer und ein Stellglied. Die Greifer sind mit dem Stellglied wirkverbunden, sodass sie gleichzeitig in Bewegung versetzbar sind. Wird beispielsweise das Stellglied verschoben, dann werden gleichzeitig die Greifer in Bewegung versetzt. Hierbei ist vorzugsweise eine Umkehrung der Bewegung möglich, wobei eine Bewegung der Greifer gleichzeitig das Stellglied mitbewegt. Die Greifer und das Stellglied fixieren durch die Bewegung den Gegenstand.

Es wird vorgeschlagen an den Greifern jeweils einen ersten Steuerabschnitt und an dem Stellglied einen zweiten Steuerabschnitt vorzusehen, wobei der erste Steuerabschnitt entlang des zweiten Steuerabschnitts verschiebbar ist. Dabei stellt die Verschiebung eine Relativbewegung zwischen den beiden Steuerabschnitten dar. In umgekehrter Weise kann bei einer alternativen Greifereinheit der zweite Steuerabschnitt entlang des ersten Steuerabschnitts verschoben werden. Die Greifereinheit kann aufgrund der unmittelbaren Wirkverbindung des Greifers mit dem Stellglied sehr hohe Taktzeiten realisieren, da eine Verschiebung mit hohen Geschwindigkeiten erfolgen kann. Dabei sind die durch die vorteilhafte Mechanik der Greifereinheit bereitgestellten Bewegungsabläufe besonders robust gegenüber Verschmutzungen und Verschleiß, sodass Ausfallzeiten geringgehalten werden.

Das Stellglied der erfindungsgemäßen Greifereinheit ist zwischen den zwei Greifern positioniert. Die zwei Greifer und das Stellglied begrenzen eine Öffnung, in die der Gegenstand in einer Fügerichtung einfügbar ist. Dadurch ist der Gegenstand durch die zwei Greifer und das Stellglied dreipunktförmig fixierbar. Der Gegenstand wird gleichzeitig durch die beiden beweglichen Greifer ergriffen und innerhalb der Umgreifung durch das Stellglied zusätzlich fixiert. Dadurch können Gegenstände unabhängig von deren Form und Durchmesser ergriffen werden. Bei dieser Ausführungsformen wird durch eine Fixierung vorzugsweise über drei Anlagepunkten eine spielfreie Fixierung erreicht. Alternativ kann die Greifereinheit mit wenigstens einem beweglichen Greifer ausgeführt sein. Solch eine Greifereinheit weist ein feststehendes Element auf, an dem der Gegenstand anliegen kann, während der bewegliche Greifer den Gegenstand zusammen mit dem Stellglied an dem feststehenden Element fixiert. Das feststehende Element kann den Gegenstand bezüglich des Greifers und des Stellglied gegenhalten. Bei dieser Ausführungsformen wird durch eine Fixierung vorzugsweise über drei Anlagepunkten eine spielfreie Fixierung erreicht. Vorteilhafterweise kann vorgesehen sein, dass das Stellglied mit einem insbesondere pneumatischen, hydraulischen, mechanischen oder elektrischen Aktuator verbunden ist, wobei der Aktuator die gleichzeitige Bewegung der Greifer und des Stellglieds antreibt. Beispielsweise kann der Aktuator ein Druckluft- oder Hydraulikzylinder oder elektrischer Linearantrieb sein, der mit dem Stellglied verbunden ist. Das Stellglied ist vorzugsweise unmittelbar mit dem Aktuator verbunden, sodass eine Bewegung des Aktuators insbesondere Übersetzungsfrei auf das Stellglied übertragen werden kann. Solch ein direkter Aufbau des Stellglieds mit dem Aktuator ermöglicht es sehr hohe Taktgeschwindigkeiten mit der Greifereinheit auszuführen, wobei ein besonders schneller Aktuator gewählt werden kann. Vorteilhafterweise ist der Aktuator ausgebildet, das Stellglied in zwei entgegengesetzte Richtungen zu bewegen, insbesondere in zwei entgegengesetzte Richtung linear zu verschieben, um die Greifereinheit mittels des Aktuators zu Öffnen und zu Schließen.

Bei einer besonderen Ausführungsform kann der erste Steuerabschnitt wenigstens einen ersten Bereich aufweisen, über den eine Öffnungskraft für eine Öffnungsbewegung des Greifers aufgenommen werden kann. Ein zweiter Bereich des Steuerabschnitts kann eine Schließkraft für eine Schließbewegung des Greifers aufnehmen. Die Öffnungskraft und die Schließkraft werden dabei von dem zweiten Steuerabschnitt auf die jeweiligen Bereiche übertragen. Insbesondere können die Öffnungskraft und die Schließkraft durch das Stellglied erzeugt werden. Durch die beiden Bereiche können hohe Kräfte aufgenommen werden, die hohe Beschleunigungen und damit zu hohe Taktgeschwindigkeiten der Greifereinheit ermöglichen.

Um eine kompakte Greifereinheit zu erlangen, kann der erste Steuerabschnitt eine Führungskontur aufweisen, die die beiden Bereiche für die Aufnahme der Öffnungskraft und der Schließkraft umfasst. Der zweite Steuerabschnitt kann hierbei insbesondere mit einem Fortsatz entlang der Führungskontur bewegt werden. Somit können die beiden zusammenwirkenden Steuerabschnitte auf eine Führungskontur begrenzt werden, die geeignet ist, hohe Kräfte über die beiden Bereiche aufzunehmen.

Die Übertragung der Kräfte erfolgt vorzugsweise während einer Bewegung des Fortsatzes entlang der Führungskontur. Der Fortsatz kann gleitend oder rollend über die Führungskontur bewegt werden. Für die gleitende Bewegung kann eine Teflon- oder Messingbuchse auf dem Fortsatz angeordnet sein. Ferner kann für die rollende Bewegung ein Wälzlager oder eine drehbare Buchse auf dem Fortsatz positioniert werden.

Eine vorteilhafte Weiterbildung umfasst bevorzugt eine Führungskontur, die in geschlossener Weise innerhalb des Greifers verlaufen kann. Der erste Bereich kann hierbei gegenüberliegend zu dem zweiten Bereich an dem ersten Steuerabschnitt ausgebildet sein. Die Führungskontur kann von dem Material des Greifers umschlossen sein, wobei das Material einen Rand darbietet, der die Führungskontur darstellt. An dem Rand können die Bereiche ausgebildet sein. Der Rand weist wenigstens abschnittsweise die einander zugewandten Bereiche auf. Vorzugsweise kann ein Fortsatz des zweiten Steuerabschnitts in die Führungskontur hineinragen, sodass der Fortsatz von der Führungskontur umgeben ist. Eine alternative Ausführungsform weist eine Führungskontur auf, die an einem äußeren Rand des Greifers ausgebildet ist, sodass die jeweiligen Randabschnitte mit dem ersten und dem zweiten Bereich voneinander abgewandt sind, aber sich vorzugsweise dennoch gegenüberliegen. Die Führungskontur kann in solch einem Fall beispielsweise das Material des Greifers in geschlossener Weise umlaufen oder wenigstens aus zwei separaten Randabschnitten, die die beiden Bereiche beinhalten, ausgeführt sein. Solch eine das Material wenigstens teilweise umschließenden Führungskontur, kann an einer Erhebung auf dem Greifer ausgebildet sein. Beide Alternativen gewährleisten einen besonders bauraumsparenden und dennoch robusten Aufbau der Greifereinheit. Bei solch einer Ausführung kann jeweils ein Fortsatz des zweiten Steuerabschnitts an einem Bereich beweglich aufliegen.

Vorzugsweise ist bei einer Ausführungsform der erste Steuerabschnitt langlochartig entlang einer Längsrichtung des Greifers ausgebildet. Dabei kann sich der Steuerabschnitt auf einer Oberfläche des Greifers nutartig erstrecken. Eine alternative Ausführungsform umfasst einen ersten Steuerabschnitt, der durch das Material des Greifers entlang der Längsrichtung langlochartig, jedoch quer dazu durchgangslochartig, ausgebildet sein. Ein Fortsatz kann bei beiden Ausführungsformen in den langlochartigen Steuerabschnitt hineinragen und die Öffnungskraft beziehungsweise die Schließkraft abwechselnd bei einer Öffnungsbewegung beziehungsweise einer Schließbewegung des Greifers auf die jeweiligen sich gegenüberliegenden Bereiche übertragen. Insgesamt wird dadurch eine unmittelbare Steuerung der Greifer über den zweiten Steuerabschnitt erreicht. Da der zweite Steuerabschnitt vorzugsweise direkt mit dem Stellglied verbunden ist, können hohe Geschwindigkeiten des Stellglieds effizient auf die Greifer übertragen werden.

Geschickter Weise kann vorgesehen sein, dass der Greifer ein freies Ende aufweist, wobei das Stellglied neben den Greifer positioniert ist und entlang einer Fügerichtung des Gegenstandes in die Greifereinheit beweglich ist. Das freie Ende des Greifers weist dabei von der Greifereinheit weg, während der Greifer wenigstens teilweise eine Öffnung begrenzt, in die der Gegenstand in Fügerichtung gefügt und durch die Schließbewegung des Greifers fixiert werden kann. Die Schließbewegung wird so lange ausgeführt, bis der Greifer an dem Gegenstand anliegt. Dazu führt das Stellglied gleichzeitig eine Bewegung aus, bis es ebenfalls an dem Gegenstand zum Fixieren anliegt. Bei einer Ausführungsform mit zwei Greifen kann das Stellglied vorzugsweise zwischen den Greifern positioniert sein, wobei die freien Enden der Greifer in eine gleiche Richtung weisen. Das Stellglied führt sein Stellbewegung zwischen den Greifern aus. Dabei ist die Öffnung durch die beiden Greifer begrenzt und das Stellglied. Durch die Kopplung der Bewegungen des Greifers und des Stellglieds können Gegenstände in hoher Geschwindigkeit in die Öffnung der Greifereinheit gesetzt und fixiert werden.

Bei einer zweckmäßigen Ausführungsform kann wenigstens einer der Bereiche zur Aufnahme der Schließ- beziehungsweise Öffnungskraft bezüglich der Bewegungsrichtung des Stellgliedes verkippt und/oder gekrümmt sein. Ist nun der zweite Steuerabschnitt des Stellglieds mit dem die beiden Bereiche tragenden ersten Steuerabschnitt wirkverbunden, kann eine Bewegung des Stellglieds aufgrund der Verkippung und/oder Krümmung eine zur Bewegungsrichtung des Stellglieds quer ausgerichtete Kraft auf den Bereich ausüben. Dadurch wird der Greifer in einer Richtung quer zur Bewegungsrichtung des Stellglieds bewegt. Insbesondere ist die Schließbewegung und die Öffnungsbewegung des Greifers quer zur Bewegungsrichtung des Stellglieds ausgerichtet. Diese unmittelbare Umwandlung der Bewegung ermöglicht es sehr kurze Taktzeiten mit der Greifereinheit zu realisieren.

Ein Kontaktrand des Stellglieds liegt bevorzugt in einer Ebene mit einem Kontaktrand des Greifers, wobei die Ebene parallel zur oder in der Ebene der Bewegung des Greifers liegt. Mit dem Kontaktrand liegen das Stellglied und der Greifer an dem zu fixierenden Gegenstand an. Damit ein sicheres Fixieren des Gegenstandes erfolgen kann, liegen die Kontaktränder auf einer gemeinsamen Ebene. Andernfalls würde insbesondere bei einem länglichen Gegenstand ein Drehmoment zwischen dem Kontaktrand des Stellglieds und dem Kontaktrand des Greifers entstehen, welches ein Verkippen des Gegenstandes zur Folge haben könnte.

Es ist vorteilhaft, den Greifer für die Ausführung einer Schwenkbewegung zum Greifen des Gegenstands einzurichten. Die Schwenkbewegung kann hierbei durch eine Linearbewegung des Stellglieds angetrieben werden, sodass insbesondere ein Gegenstand mit einem von einer Kreisform abweichenden Querschnitt greifbar ist. Die Schwenkbewegung des Greifers und die lineare Bewegung des Stellglieds sind so zueinander ausgerichtet, dass eine Schwenkbewegung des Kontaktrands des Greifers in einer gemiensamen Ebene einer linearen Bewegung des Kontaktrands des Stellglieds liegt. Bei zwei Greifern schwenken beide Kontaktränder in einer gemeinsamen Ebene mit dem Kontaktrand des Stellglieds. Durch die vorteilhafte Dreipunktauflage der Kontaktränder und der weiträumigen Schwenkbewegung und Linearbewegung können große sowie kleine Durchmesser in der Öffnung der Greifereinheit aufgenommen werden. Ferner können auch beispielsweise eckige, dreieckige, dreirundförmige, ovale oder sonstige unrunde Querschnitte von Gegenständen aufgenommen werden. Dies ist insbesondere für das Greifen von Containern wie Flaschen, Dosen, Gläsern, Tassen oder sonstigen Gegenständen vorteilhaft.

Vorzugsweise ist das Stellglied mit einer Stange des Aktuators und wenigstens einer dazu parallelen Führungsachse verbunden. Ist der Aktuator beispielsweise ein Hydraulik- oder Pneumatikzylinder oder ein elektrischer Linearantrieb, dann kann die Stange eine Kolbenstange sein, die sich im Wesentlichen in Richtung der Linearbewegung des Stellglieds erstreckt. Die Führungsachse kann ebenfalls durch eine Stange oder ein Rohr realisiert werden, wobei die Führungsachse in Gleitbuchsen gelagert werden kann. Der Aktuator und die Führungsachse können dabei in einem gemeinsamen Gehäuse angeordnet sein, zu dem sie eine relative lineare Bewegung ausführen. Es können zwei Führungsachsen vorgesehen sein, zwischen denen die Stange positioniert ist. Dadurch wird eine bauraumsparende Ausführung der Greifereinheit erreicht.

Von besonderem Vorteil ist eine wenigstens zwei Greifereinheiten umfassende Vorrichtung. Die Greifereinheiten werden bei dieser bevorzugten Ausführungsform übereinander angeordnet, sodass eine Greiferdoppeleinheit erhalten wird. Die freien Enden der Greifer der beiden Greifereinheiten weisen in die gleiche Richtung. Die Öffnungen der Greifereinheiten zum Aufnehmen eines Gegenstands fluchten miteinander in einer vertikalen Richtung. Die vertikale Richtung erstreckt sich zwischen der oberen und der unteren Greifereinheit. Dadurch können länglichen Gegenstände durch beide Greifereinheiten gleichzeitig ergriffen werden. Dabei können die beiden Greifereinheiten und ihren vorteilhaften dreipunktartig ausgestalteten Öffnungen unterschiedliche Durchmesser und Querschnitte an einem Gegenstand ergreifen. Beispielsweise kann eine Flasche die im Bereich der oberen Greifereinheit einen kleineren Durchmesser aufweist als im Bereich der unteren Greifereinheit durch die Greiferdoppeleinheit fest gegriffen werden. Bevorzugt ist eine Verstellvorrichtung vorgesehen, um den Abstand der beiden Greifereinheiten einer Greiferdoppeleinheit zueinander zu verstellen, so dass eine Anpassung an verschiedene Objekthöhen, insbesondere verschiende Flaschenhöhen möglich ist.

Eine Weiterbildung der vorteilhaften Vorrichtung umfasst wenigstens zwei Greiferdoppeleinheiten, die bezüglich einer Rotationsachse in unterschiedliche Richtungen sternförmig radial abstehend ausgerichtet sind. Die freien Enden der Greifereinheiten weisen dabei von der Rotationsachse ausgehend radial nach außen. Die Greiferdoppeleinheit können bezüglich der Rotationsachse gegenüberliegend angeordnet sein oder einen Winkel kleiner als 180° miteinander einschließen. Die Rotationsachse ist im Wesentlichen parallel zur vertikalen Achse ausgerichtet, bezüglich der die Öffnungen der Greifereinheiten einer Greiferdoppeleinheit miteinander fluchten. Die Vorrichtung kann um die Rotationsachse gedreht werden, wobei die Greifereinheiten eine gebundene Drehung ausführen. Solch eine Vorrichtung kann neben ein Förderband angeordnet werden, wobei ein Gegenstand durch eine Greiferdoppeleinheit ergriffen und anschließend durch eine Rotation um die Rotationsachse von dem Förderband in einer Kreisbewegung wegbewegt wird, bis eine leere Greiferdoppeleinheit im Förderband positioniert ist. Die beladene Greiferdoppeleinheit kann den Gegenstand zu einem weiteren Ort transportieren, während die leere Greiferdoppeleinheit einen neuen Gegenstand greifen kann. Vorzugsweise weist die Vorrichtung eine Vielzahl von sternförmig ausgerichteten Greiferdoppeleinheiten auf, wobei insbesondere zumindest acht, insbesondere zumindest zehn, bevorzugt zwölf Greiferdoppeleinheit in einer Vorrichtung zur Erreichung hoher Handhabungsgeschwindigkeiten vorteilhaft dienen können.

Um Gegenstände unterschiedlicher Größe vorteilhaft greifen zu können, kann ein Abstand der Greifereinheiten in einer Greiferdoppeleinheit bezüglich der Rotationsachse zueinander verstellbar sein. Dazu können die Greifereinheiten durch eine Stellmittel vertikal entlang einer Achse, die parallel zur Rotationsachse ist, verschoben werden. Im Falle mehrere Greiferdoppeleinheiten kann vorgesehen sein, dass die oberen und die unteren Greiferdoppeleinheiten jeweils auf einem Trägerelement angeordnet sind, die entlang der Rotationsachse verstellt werden können. Die vertikal verstellbaren Greifereinheiten erhöhen die Flexibilität der Vorrichtung hinsichtlich unterschiedlich geformter Gegenstände.

Weitere vorteilhafte Ausgestaltungen der Erfindung sind in den Unteransprüchen und der folgenden Figurenbeschreibung offenbart. Es zeigen
- Fig. 1: eine perspektivische Unteransicht einer Greifereinheit mit einem langlochartigen Steuerabschnitt,
- Fig. 2: eine perspektivische Draufsicht der Greifereinheit ohne Gegenstand,
- Fig. 3: eine Draufsicht auf eine Greifereinheit mit benachbarten Greifereinheiten, wobei in der Greifereinheit ein von einer Kreisform abweichender Gegenstand aufgenommen ist,
- Fig. 4: eine Draufsicht auf eine Greifereinheit mit einem runden Gegenstand mit relativ kleinem Durchmesser,
- Fig. 5: eine Draufsicht auf eine Greifereinheit mit einem runden Gegenstand mit relativ großem Durchmesser,
- Fig. 6: ein Radialschnitt durch eine Greiferdoppeleinheit in einer Vorrichtung, wobei ein Gegenstand in beiden Greifereinheiten aufgenommen ist,
- Fig. 7: eine perspektivische Ansicht der Vorrichtung mit einer Vielzahl von sternförmig um eine Rotationsachse angeordneten Greiferdoppeleinheiten, wobei in einer Greiferdoppeleinheit eine Flasche mit unrundem Querschnitt aufgenommen ist, und
- Fig. 8: eine perspektivische Ansicht der Vorrichtung mit sternförmig angeordneten Greiferdoppeleinheit, wobei in einer Greiferdoppeleinheit eine Flasche mit in vertikaler Richtung veränderlichen Durchmesser aufgenommen ist.

In den unterschiedlichen Figuren sind gleiche Teile stets mit denselben Bezugszeichen versehen, weswegen diese in der Regel auch nur einmal beschrieben werden.

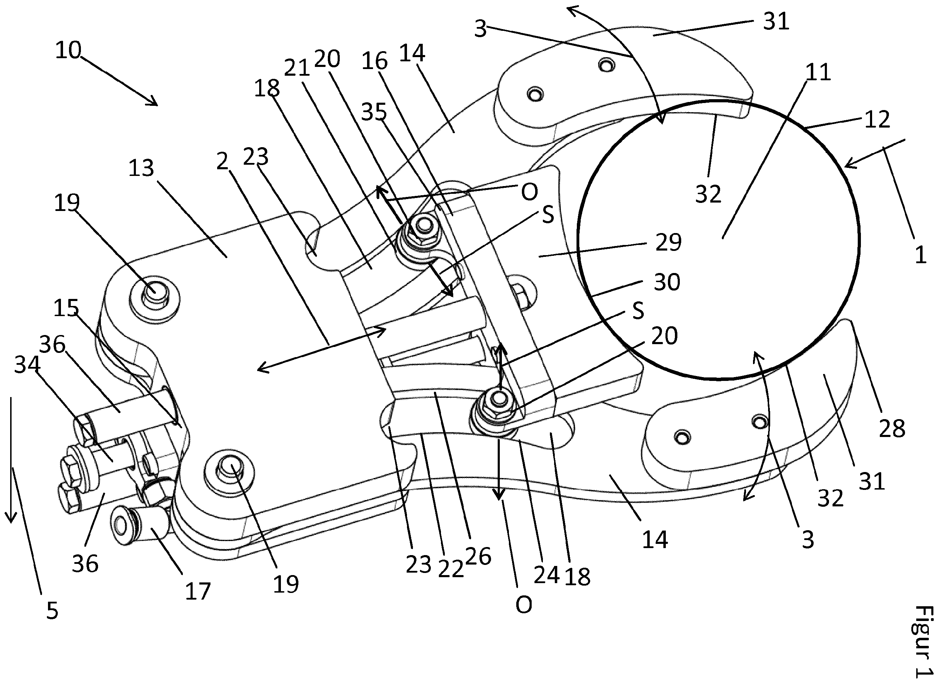

In Figur 1 ist eine erfindungsgemäße Greifereinheit 10 zum Greifen von Gegenständen 12 abgebildet. Die Greifereinheit 10 umfasst zwei Greifer 14 und ein Stellglied 16. Die Greifer 14 und das Stellglied 16 begrenzen eine Öffnung 11, in die der Gegenstand 12 in einer Fügerichtung 1 eingefügt werden kann. Das Stellglied 16 ist zwischen den Greifern 14 angeordnet. Die Greifer 14 und das Stellglied 16 sind insbesondere in einer symmetrischen Anordnung aufgestellt, wobei entlang der Symmetrieachse das Stellglied 16 angeordnet ist. Die Anordnung aus Greifern 14 und Stellglied 16 bildet eine dreipunktförmige Fixierung des Gegenstands 12 in der Öffnung 11.

Die Greifer 14 sind beweglich, sodass sie eine Schwenkbewegung 3 ausführen können. Ebenso ist das Stellglied 16 beweglich und führt eine Linearbewegung 2 aus. Durch die Schwenkbewegung 3 der Greifer 14 kann der Durchmesser der Öffnung 11 vergrößert und verkleinert werden. Dadurch können Gegenstände 12 mit sowohl großen als auch kleinem Durchmesser gegriffen werden. Ferner stellt sich in Abhängigkeit der Schwenkbewegung 3 das Stellglied 16 durch die Linearbewegung 2 auf den zu greifenden Durchmesser des Gegenstands 12 ein. Wird nun ein Gegenstand 12 wie ein Container in Fügerichtung 1 zur Öffnung 11 bewegt, dann schwenken die Greifer 14 nach außen auf und vergrößern den Durchmesser der Öffnung 11, während gleichzeitig das Stellglied 16 eine Linearbewegung 2 ausführt, die das Stellglied von der Öffnung 11 entfernt. Wenn der Gegenstand 12 in die Nähe der Öffnung 11 kommt oder in die Öffnung 11 angeordnet wird, dann führen die Greifer 14 eine Schwenkbewegung 3 in Richtung des Gegenstands 12 aus und verkleinern den Durchmesser der Öffnung 11. Gleichzeitig führt das Stellglied 16 eine Linearbewegung 2 in Richtung des Gegenstands 12 aus. Abschließend kommen die Greifer 14 und das Stellglied 16 in einer dreipunktförmigen Weise auf dem Gegenstand 12 zum Liegen. Vorzugsweise wird jeder Punkt der dreipunktförmigen Fixierung durch jeweils einen Greifer 14 oder das Stellglied 16 bereitgestellt.

Die Schwenkbewegung 3 ist mit der Linearbewegung 2 synchronisiert. Die Bewegung des Stellglieds 16 erfolgt gleichzeitig und in Abhängigkeit mit der Bewegung der Greifer 14. Dazu weist der jeweilige Greifer 14 einen ersten Steuerabschnitt 18 und das Stellglied 16 ein dem jeweiligen ersten Steuerabschnitt 18 zugeordneten zweiten Steuerabschnitt 20 auf. Der erste Steuerabschnitt 18 ist langlochartig in dem Greifer 14 ausgeformt. Dabei erstreckt sich eine den ersten Steuerabschnitt 18 bildende Ausnehmung entlang einer Längsterstreckung des Greifers 14. Die Ausnehmung ist nutartig ausgebildet, und weist eine taschenartige Vertiefung auf der Oberfläche des Greifers 14 auf. Gegenüber der Linearbewegung 2 ist der erste Steuerabschnitt 18 nach außen gekrümmt. Die nach außen gerichtete Krümmung des ersten Steuerabschnitts 18 liegt bei jeder Schwenkposition der Greifer 14 vor. Der zweite Steuerabschnitt 20 ist durch einen in den jeweiligen ersten Steuerabschnitt 18 hineinragenden Fortsatz 21 ausgebildet. Der Fortsatz 21 kann ein Wälzlager oder ein gleitender Fortsatz sein.

Der erste Steuerabschnitt 18 ist durch eine in dem Material des Greifers 14 umlaufende Führungskontur 22 ausgebildet. Die Führungskontur 22 umsäumt die langlochartige Struktur des ersten Steuerabschnitts 18. Die Führungskontur 22 umfasst dabei einen ersten Bereich 24 für die Aufnahme einer Öffnungskraft O und einen zweiten Bereich 26 für die Aufnahme einer Schließkraft S. Die Öffnungskraft O verursacht die nach außen gerichtete Schwenkbewegung 3, die zur Vergrößerung der Öffnung 11 führt, weswegen der erste Bereich 24 an einer Seite der Führungskontur 22 angeordnet ist, die in Richtung der Schwenkbewegung 3 nach außen positioniert ist. Die Schließkraft S bewirkt eine Verkleinerung der Öffnung 11, in dem sie eine nach innen gerichtete Schwenkbewegung 3 antreibt. Der entsprechende zweite Bereich 26 ist in Richtung der Schwenkbewegung 3 weiter innen positioniert als der erste Bereich 24. Die Kräfte O, S für die Schwenkbewegung 3 werden aus einer Kraft des Stellglieds 16 in Richtung der Linearbewegung 2 abgeleitet. Dazu ist das Stellglied 16 mit einem Aktuator 15 verbunden, der in der Ausführungsform der Figur 1 ein pneumatischer Zylinder ist. Der Aktuator 15 weist einen Anschluss 17 auf, an den eine Leitung für ein den Aktuator 15 betätigendes Medium wie Strom, Luft oder Öl angeschlossen werden kann. Die Kraft in Richtung der Linearbewegung 2 wird derartig auf den zweiten Steuerabschnitt 18 übertragen, dass sie am Fortsatz 21 eine Kraftkomponente auf den jeweiligen Bereich 24, 26 aufgrund der Krümmung des ersten Steuerabschnitts 18 überträgt. Diese Kraftkomponente stellt die Schließkraft S beziehungsweise die Öffnungskraft O dar.

Der zweite Steuerabschnitt 20 beziehungsweise der Fortsatz 21 ist starr mit dem Stellglied 16 verbunden und ragt insbesondere von dem Stellglied 16 ab. Ferner ist der zweite Steuerabschnitt 20 an einem axialen Ende des Aktuators 15 in Bewegungsrichtung 2 angeordnet. Es sind vorzugsweise zwei Fortsätze 21 an dem Stellglied 16 angeformt, wobei die Fortsätze 21 in Richtung der Greifer 14 gerichtet sind. Jeweils ein Fortsatz 21 ist von einer Führungskontur 22 des jeweiligen Greifers 14 umschlossen. Der nutartige erste Steuerabschnitt 18 ist dem Stellglied 16 zugewandt. Beispielsweise können die Fortsätze 21 durch an das Stellglied 16 angeschraubt Wälzlager ausgebildet sein, die in den jeweiligen langlochartigen erste Steuerabschnitt 18 hineinragen und auf der Führungskontur rollend oder gleitend verschoben werden. Dabei leiten die Fortsätze 21 die jeweiligen Kraftkomponenten O, S in die ersten und zweiten Bereiche 24, 26 ein. Alternativ kann jeweils ein gleitender Fortsatz 21 vorgesehen sein. Es ist jeweils ein Fortsatz 21 auf einer Seite eines Greifers 14 angeordnet. Die beiden Fortsätze 21 weisen zueinander eine Distanz auf, die quer zur Richtung der Linearbewegung 2 ausgerichtet ist.

Freie Enden 28 der Greifer 14 sind im Bereich der Öffnung 11 positioniert. Die freien Enden 28 weisen vom Aktuator 15 weg und werden während der Schwenkbewegung 3 mit geschwenkt. Um einen Gegenstand 12 in die Öffnung zu positionieren, wird der Gegenstand 12 in Fügerichtung 1 an den freien Enden 28 vorbeigeführt. An gegenüberliegenden Enden der Greifer 14 sind Gelenke 19 angeordnet. Jeder Greifer 14 weist wenigstens ein Gelenk 19 auf, welches eine vertikale Rotationsachse für die Schwenkbewegung 3 bereitstellt. Das Gelenk 19 bildet das Zentrum der Schwenkbewegung 3. Das Gelenk 19 ist in einem Gehäuse 13 gelagert, wobei insbesondere ein Bolzen durch das Gehäuse 13 und das Ende des jeweiligen Greifers 14 durchgeführt wird. Ein hinterer Teil des jeweiligen Greifers 14 ist in dem Gehäuse 13 angeordnet. Ferner weist das Gehäuse 13 im Bereich des dem Gelenk 19 zugewandten Abschnitts des ersten Steuerabschnitts 18 eine Aussparung 23 für den zweiten Steuerabschnitt 20 auf. An dem Gehäuse 13 sind zwei Anschlüsse 17 für den Aktuator 15 angeordnet. Im Fall eines pneumatischen Aktuators 15, ist dessen Zylinder in dem Gehäuse 13 positioniert.

Durch die Linearbewegung 2 des Stellglieds 16, welche durch den Aktuator 15 angetrieben wird, wird also der zweite Steuerabschnitt 20 mit seinen Fortsätzen 21 in dem ersten Steuerabschnitt 18 entlang der Führungskontur 22 verschoben. Eine vorwärtsgerichtete Linearbewegung 2 des Stellglieds 16 führt die Fortsätze 21 entlang des langlochartigen zweiten Steuerabschnitts 20. Die Vorwärtsbewegung des Stellglieds 16 wird gestoppt, wenn ein Kontaktrand 30 eines an dem Stellglied 16 angebrachten Stellgliedelements 29 an dem Gegenstand 12 zum Liegen kommt. Durch die Krümmung des langlochartigen Steuerabschnitt 18 ist die Schwenkbewegung 3 der Greifer 14 derartig mit der Linearbewegung 2 synchronisiert, dass gleichzeitig die Greiferelemente 31 der Greifer 14 mit einem ihnen zugeordneten Kontaktrand 32 seitlich an dem Gegenstand 12 anschlagen. Dazu schwenken die Greifer 14 in Richtung des Gegenstands 12, da sich die ersten Steuerabschnitte 18 der Greifer 14 auf die Distanz der Fortsätze 21 zueinander einschwenken. Die durch die Kräfte O, S beaufschlagten Bereiche 24, 26 der Führungskontur 22 werden um die Gelenke 19 herum auf die Distanz der Fortsätze 21 eingeschwenkt. Dadurch wird die dreipunktförmige Fixierung des Gegenstandes realisiert, wobei zwischen den Kontakträndern 32 der Greifer 14 auf einer der Fügerichtung 1 gegenüberliegenden Seite der Kontaktrand 30 des Stellglieds 16 anliegt. Den kleinsten Durchmesser der Öffnung 11 können die Greifer 14 und das Stellglied 16 einstellen, wenn die Fortsätze 21 bis an das vordere Ende der Führungskontur 22 verschoben werden. Eine weitere vorwärtsgerichtete Linearbewegung 2 ist dann nicht mehr möglich.

Zieht der Aktuator 15 das Stellglied 16 durch eine Linearbewegung 2 zurück, dann werden die Fortsätze 21 entlang der Führungskontur 22 bis an das dem Gelenk 19 zugewandte Ende geschoben. Dabei ragt der jeweilige Fortsatz 21 in die Aussparung 23 des Gehäuses 13 hinein. Die Aussparung 23 weist eine im Wesentlichen komplementäre Form zu dem zweiten Steuerabschnitt 20 auf. In dieser Position stellen die Greifer 14 und das Stellglied 16 einen maximalen Durchmesser der Öffnung 11 bereit.

In dem Gehäuse 13 sind Gleitbuchsen positioniert, in denen wenigstens eine Führungsachse 36 parallel zu einer Stange 34 des Aktuators 15 geführt wird. Es sind zwei Führungsachsen 36 parallel zu der Stange 34 angeordnet, wobei die Stange 34 vorzugsweise zwischen den Führungsachsen 36 positioniert ist. Die Stange 34 und die Führungsachse 36 ragen in Richtung der Linearbewegung 2 vorne und hinten aus dem Gehäuse 13 heraus und sind parallel zur Linearbewegung 2 ausgerichtet. Der Aktuator 15 ist im Fall eines Zylinders mit einem Kolben versehen, der eine vorne und hinten vom Kolben ausgehende Stange 34 aufweist. Die außerhalb des Gehäuses liegenden Enden der Stange 34 und der Führungsachse 36 sind miteinander verbunden. Dabei können die Enden der Stange 34 und der Führungsachse 36 im Bereich des Stellglieds 16 durch eine vordere Verbindungsplatte 35 miteinander verbunden werden. Vorzugsweise ist der zweite Stellabschnitt 20 an den der Öffnung 11 zugewandten Enden der Stange 34 und der Führungsachse 36 angebracht. An der vorderen Verbindungsplatte 35 sind insbesondere die Fortsätze 21 angeformt und ragen in Richtung Greifer 14 ab. Dadurch sind die Achsen vorzugsweise in vertikaler Richtung 5 übereinander angeordnet. Die vertikalen Richtung 5 ist im Wesentlichen senkrecht zu einer Ebene in der die Greifer 14 die Schwenkbewegung 3 ausführen. An den gegenüberliegenden Enden können in einer Abwandlung des beschriebenen Ausführungsbeispiels zur zusätzlichen Stabilisierung die Führungsachse 36 und die Stange 34 mit einer (nicht dargestellten) hinteren Verbindungsplatte verbunden werden.

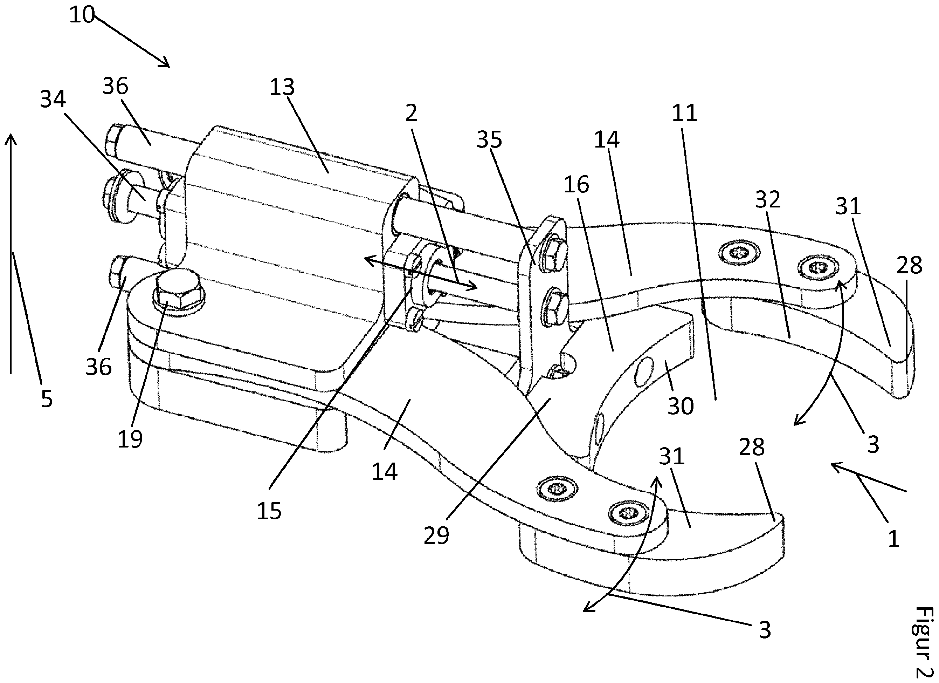

Figur 2 offenbart eine perspektivische Ansicht der Oberseite der Greifereinheit 10. Der Kontaktrand 30 des Stellgliedelements 29 und die Kontaktränder 32 der Greiferelemente 31 liegen in einer gemeinsamen Ebene. Ferner bewegen sich Kontaktränder 30, 32 in dieser gemeinsamen Ebene. Die Kontaktränder 30, 32 stellen vorzugsweise eine in vertikaler Richtung 5 gerade jedoch in Umfangsrichtung der Öffnung 11 gekrümmte Fläche dar, wobei die jeweilige Fläche der Öffnung 11 zugewandt ist. Die Verbindungsplatte 35 erstreckt sich über die Kontaktränder 30, 32 in vertikaler Richtung 5 hinaus. Vorzugsweise sind die Greiferelemente 31 sichelförmig ausgebildet und weisen jeweils ein spitziges freies Ende 28 auf, welches ebenfalls in der Ebene der Kontaktränder 30, 32 liegt.

Das Stellgliedelement 29 sowie die Greiferelemente 31 sind lösbar an das Stellglied 16 beziehungsweise die Greifer 14 angeschraubt. Insbesondere können das Stellgliedelement 29 und die Greiferelemente 31 einen Kunststoff oder einen Gummi enthalten. Vorzugsweise können das Stellgliedelement 29 und die Greiferelemente 31 für bestimmte Querschnitte von Gegenständen 12 ausgelegt und angeschraubt werden.

Das Gehäuse 13 umfasst die Gelenke 19, wobei ein Schlitz für den jeweiligen Greifer 14 in dem Gehäuse 13 ausgeführt ist, sodass das Gelenk 19 senkrecht zu dem Schlitz durch den Greifer 14 hindurch führt. Die Rotationsachse des Gelenks 14 ist parallel zur vertikalen Richtung 5.

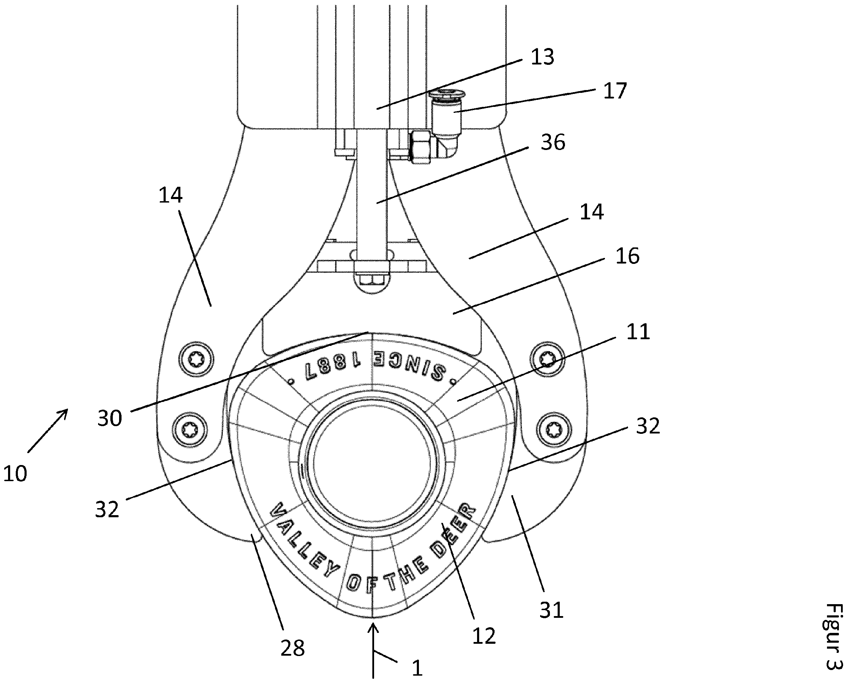

Figur 3 zeigt eine Flasche als Gegenstand 12, die in der Öffnung 11 der Greifereinheit 10 angeordnet ist. Besonderer Weise ist die Flasche nicht rund. Der Querschnitt der Flasche weicht von einem kreisförmigen Querschnitt ab, wobei die Dreipunktauflage der Greifereinheit 10 die Flasche dennoch greifen kann. Daher können durch die Greifereinheit 10 Gegenstände 12 ergriffen werden, die unrund sind. Beispielsweise sind eckige, dreieckige, dreirundförmige oder ovale Querschnitte greifbar. Insbesondere kann eine Ausrichtung solch eines Gegenstandes 12 durch die Greifer 14 und das Stellglied 16 erfolgen, sodass beispielsweise bei einem dreirundförmigen Querschnitt ein Bereich mit einem kleinen Radius zwischen den freien Enden 28 der Greifer 14 herausragt. Ferner kann der Kontaktrand 30 des Stellglieds 16 an einem Bereich des Querschnitts mit einem großen Radius anliegen. Am Gehäuse 13 ist ein Anschluss 17 für den Aktuator 15 angeordnet, durch den beispielsweise Druckluft in einen Zylinder gepresst werden kann, der die Bewegung der Greifereinheit 10 antreibt.

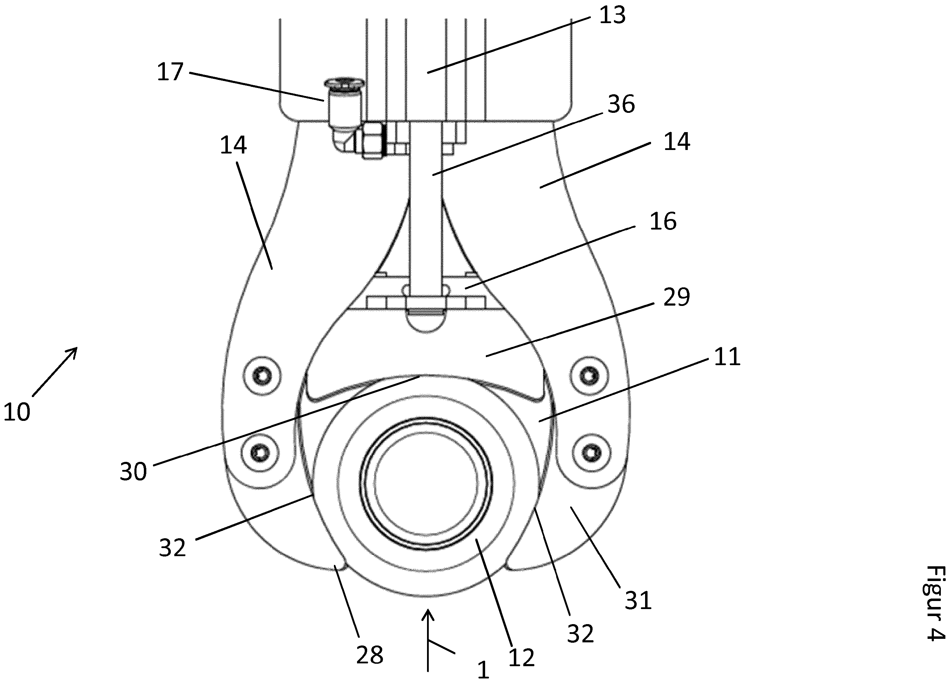

Figur 4 bildet eine Flasche mit einem kleinen Durchmesser als Gegenstand 12 ab. Die Flasche hat einen kleineren Durchmesser als die Flasche in Figur 3, wobei das Stellglied 16 in Richtung der Linearbewegung 2 weiter vorfahren muss, um eine dreipunktförmige Fixierung sicherzustellen. Dadurch werden auch die Greifer 14 in Schwenkbewegung 3 näher zusammengebracht, sodass der Durchmesser der Öffnung 11 verkleinert wird.

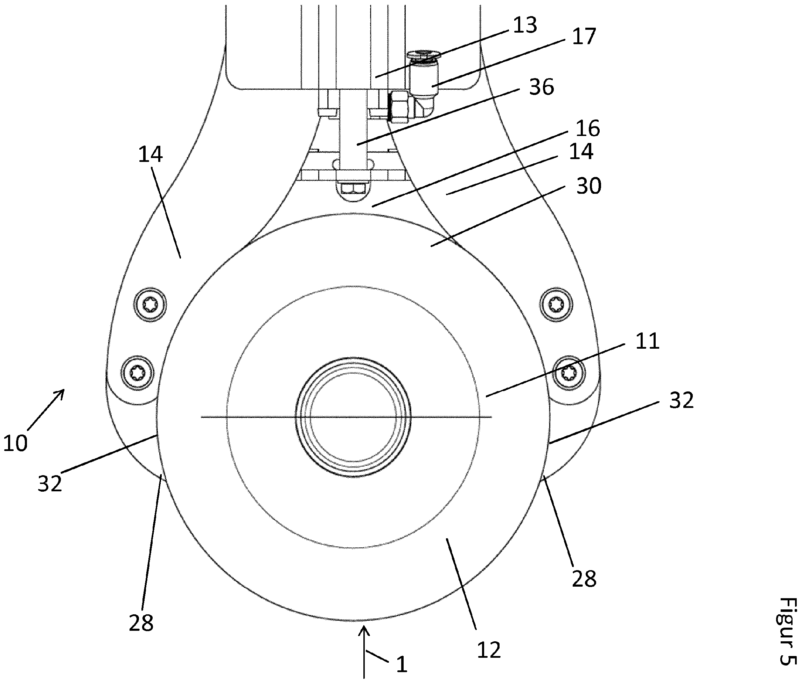

Figur 5 beinhaltet eine aufgenommene Flasche als Gegenstand 12, die einen Radius aufweist, der größer ist als in Figur 3 und 4. Bei sehr großen Radien muss das Stellglied 16 ganz nach hinten gezogen werden, sodass der zweite Steuerabschnitt 20 bis ans hintere Ende des ersten Steuerabschnitt 18 gefahren wird. Dabei sind die Greifer 14 maximal gespreizt und der Durchmesser der Öffnung 11 nimmt ein größtes Maß an.

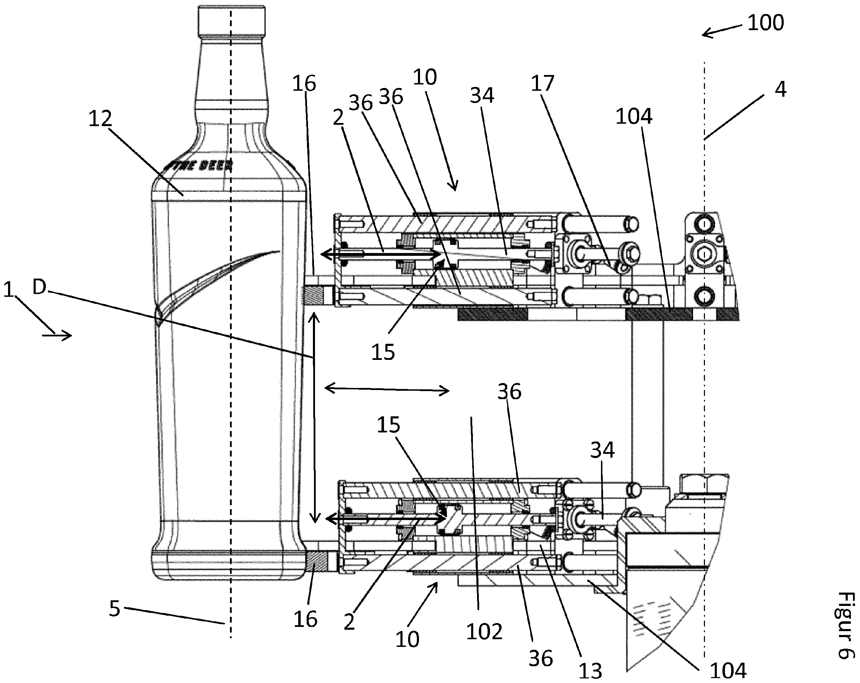

Figur 6 zeigt einen Schnitt durch eine Vorrichtung 100, die zwei in vertikaler Richtung 5 übereinander angeordnete Greifereinheiten 10 aufweist. Dadurch wird eine Greiferdoppeleinheit 102 konfiguriert. Die freien Enden 28 (hier durch die Flasche verdeckt) der Greifer 14 (hier durch die Flasche verdeckt) weisen in eine gemeinsame Richtung, sodass die Öffnungen 11 (hier durch die Flasche verdeckt) der übereinander angeordneten Greifereinheiten 10 miteinander in vertikaler Richtung 5 fluchten. Die Greifereinheiten 10 sind durch einen Abstand D voneinander in vertikaler Richtung 5 beabstandet. Jede der Greifereinheiten 10 ist auf einem Trägerelement 104 angeordnet, wobei die Trägerelemente 104 der oberen und der unteren Greifereinheit 10 ebenfalls um den Abstand D voneinander beabstandet sind. Der Abstand D kann durch ein Stellmittel variiert werden. Dazu können beispielsweise die Trägerelemente 104 bezüglich der vertikalen Richtung 5 verstellt werden. Der Abstand D zwischen den Trägerelemente 104 kann vergrößert oder verkleinert werden. Die Greiferdoppeleinheit 102 ist sternförmig bezüglich einer Rotationsachse 4 der Vorrichtung 100 angeordnet, wobei die freien Enden 28 (hier durch die Flasche verdeckt) der Greifer 14 (hier durch die Flasche verdeckt) von der Rotationsachse 4 weggerichtet sind, sodass die Gehäuse 13 der Rotationsachse 4 zugewandt sind. Die Vorrichtung kann um die Rotationsachse 4 gedreht werden, sodass die Greiferdoppeleinheit 102 eine gebundene Drehung um die Rotationsachse 4 ausführt. Vorzugsweise sind die Trägerelemente 104 ringförmig ausgestaltet. Die Trägerelemente 104 können plattenartige Ringe sein.

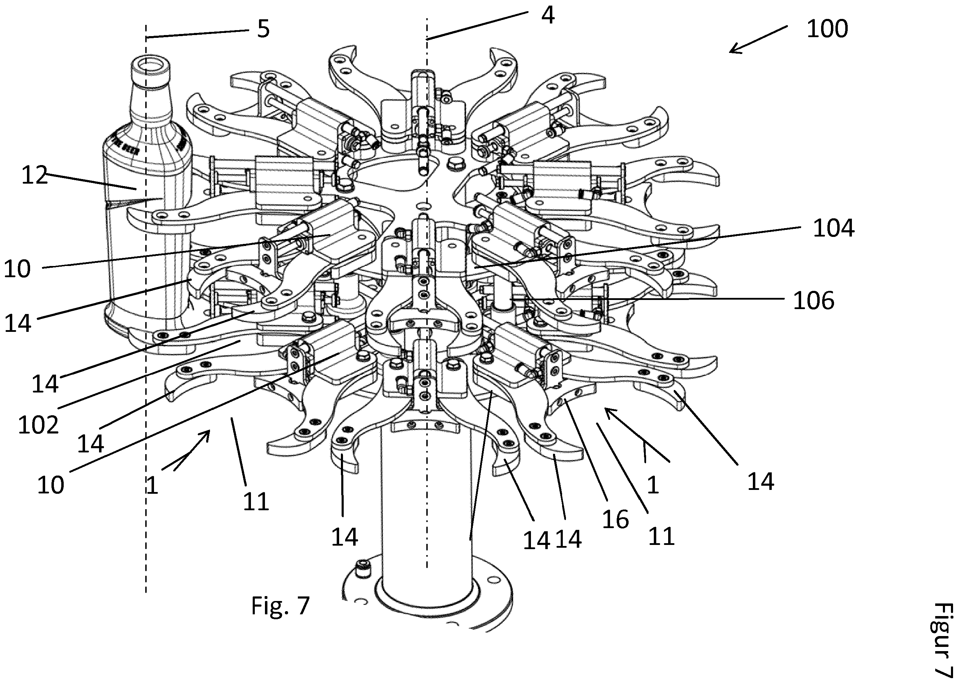

Solche ringförmigen Trägerelemente 104 sind in Figur 7 dargestellt, wobei eine Vielzahl von Greiferdoppeleinheiten 102 um die Rotationsachse 4 herum in der Vorrichtung 100 angeordnet sind. Der Abstand zwischen zwei Greiferinheiten einer Greiferdoppeleinheit ist mittels einer Verstellvorrichtung stufenlos verstellbar. Die Greiferdoppeleinheiten 102 sind sternförmig von der Rotationsachse 4 ausgehend angeordnet. Die Greiferdoppeleinheiten 102 sind auf den Trägerelemente 104 angeordnet, deren Zentrum durch die Rotationsachse 4 bestimmt wird, sodass eine Drehung der Vorrichtung 100 eine gebundene Drehung aller Greiferdoppeleinheiten 102 um die Rotationsachse 4 zur Folge hat. Die beiden ringförmigen Trägerelemente 104 sind durch ein Distanzstück 106 voneinander um den Abstand D beabstandet. Vorzugsweise kann mittels des Distanzstücks 106 der Abstand D variiert werden. Vorzugsweise sind acht Greiferdoppeleinheiten 102 in der Vorrichtung 100 positioniert. Die Vorrichtung 100 kann neben einem Förderband positioniert werden, von dem eine der Greiferdoppeleinheiten 102 einen Gegenstand 12 greift und durch die Rotation um die Rotationsachse 4 wegbewegt. Gleichzeitig wird eine leere Greiferdoppeleinheit 102 an das Förderband positioniert.

In Figur 7 ist eine Flasche durch eine Greiferdoppeleinheit 102 gegriffen worden. Die obere Greifereinheit 10 muss dabei einen unterschiedlich geformten Querschnitt der Flasche als die untere Greifereinheit 10 ergreifen. Die Querschnitte unterscheiden sich in Form und Durchmesser. Die Flasche wird dabei mit der unteren Greifereinheit 10 im Bereich des Flaschenbodens gegriffen, während die obere Greifereinheit 10 die Flasche ungefähr mittig greift. Die Flasche ragt über die obere Greifereinheit 10 in vertikaler Richtung 5 hinaus. Die beiden zueinander angeordnete Greifereinheiten 10 können unabhängig voneinander auf unterschiedliche Durchmesser und Formen eingestellt werden.

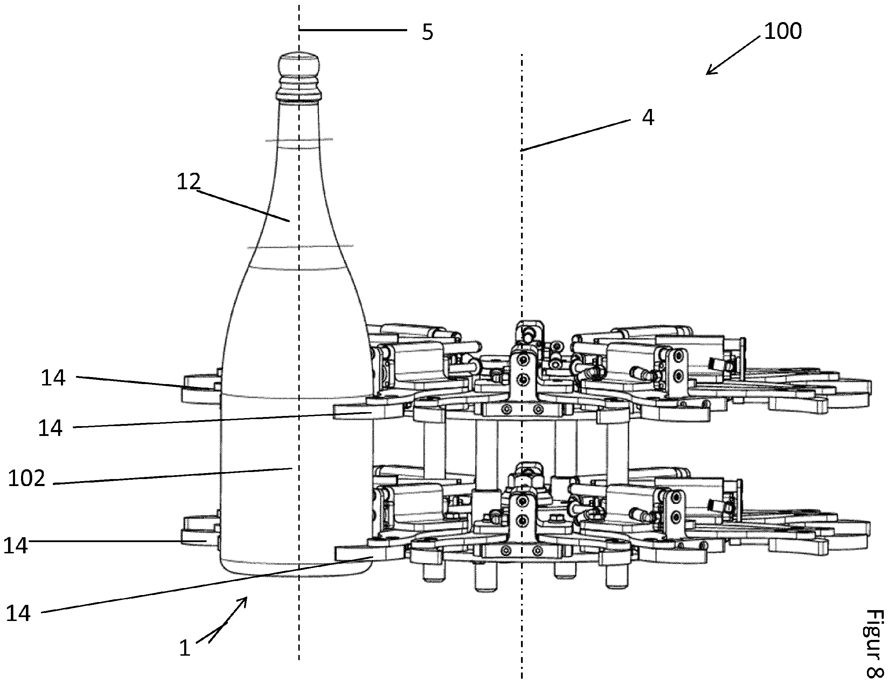

Beispielsweise zeigt Figur 8 die Vorrichtung 100 mit einer Flasche als Gegenstand in der Greiferdoppeleinheit 102, die an der oberen Greifereinheit 10 einen größeren Durchmesser als an der unteren Greifereinheit 10 besitzt.

Die Flasche beziehungsweise der Gegenstand 12 wird in Figur 3 bis 8 in Fügerichtung 1 bei zurückgezogenem Stellglied 16 und aufgeschwenkten Greifern 14 in der Öffnung 11 positioniert und darauffolgend fährt das Stellglied 16 in einer Linearbewegung 2 nach vorne, bis es zusammen mit den Greifern 14 über deren Kontaktränder 32, 30 die Flasche kontaktiert. Beispielsweise kann bei sehr kleinen Radien der zweite Steuerabschnitt 20 bis ans vordere Ende des ersten Steuerabschnitts 18 gefahren werden.

### Bezugszeichenliste:

- D: Abstand
- O: Öffnungskraft
- S: Schließkraft
- 1: Fügerichtung
- 2: Linearbewegung
- 3: Schwenkbewegung
- 4: Rotationsachse
- 5: vertikale Richtung
- 10: Greifereinheit
- 11: Fügeöffnung
- 12: Gegenstand
- 13: Gehäuse
- 14: Greifer
- 15: Aktuator
- 16: Stellglied
- 17: Anschluss
- 18: erster Steuerabschnitt
- 19: Gelenk
- 20: zweiter Steuerabschnitt
- 21: Fortsatz
- 22: Führungskontur
- 23: Aussparung
- 24: erster Bereich
- 26: zweiter Bereich
- 28: freies Ende
- 29: Stellgliedelement
- 30: Kontaktrand des Stellglieds
- 31: Greiferelement
- 32: Kontaktrand des Greifers
- 34: Stange
- 35: vordere Verbindungsplatte
- 36: Führungsachse
- 100: Vorrichtung
- 102: Greiferdoppeleinheit
- 104: Trägerelement
- 106: Distanzstück

## Patentansprüche

1. Greifereinheit (10) zum Greifen eines Gegenstands (12), insbesondere eines Containers, umfassend zwei Greifer (14) und ein Stellglied (16), wobei die Greifer (14) mit dem Stellglied (16) wirkverbunden sind, sodass sie gleichzeitig zum Greifen des Gegenstands (12) in Bewegung versetzbar sind, wobei die Greifer (14) jeweils einen ersten Steuerabschnitt (18) und das Stellglied (16) einen zweiten Steuerabschnitt (20) aufweisen, der entlang des ersten Steuerabschnitts (18) verschiebbar ist,
**dadurch gekennzeichnet,**
**dass** das Stellglied (16) zwischen den Greifern (14) positioniert ist und die Greifer (14) und das Stellglied (16) eine Öffnung (11) begrenzen, in welche der Gegenstand (12) in einer Fügerichtung (1) einfügbar ist, wodurch der Gegenstand (12) durch die Greifer (14) und das Stellglied (16) dreipunktförmig fixierbar ist.

2. Greifereinheit (10) nach Anspruch 1,
**dadurch gekennzeichnet,**
**dass** das Stellglied mit einem insbesondere pneumatischen, hydraulischen, mechanischen oder elektrischen Aktuator (15) verbunden ist, wobei der Aktuator (15) die gleichzeitige Bewegung antreibt.

3. Greifereinheit (10) nach einem der vorhergehenden Ansprüche,
**dadurch gekennzeichnet,**
**dass** der erste Steuerabschnitt (18) wenigstens einen ersten Bereich (24), über den eine Öffnungskraft (O) für eine Öffnungsbewegung des Greifers (14) aufnehmbar ist, und einen zweiten Bereich (26), über den eine Schließkraft (S) für eine Schließbewegung des Greifers (14) aufnehmbar ist, aufweist.

4. Greifereinheit (10) nach Anspruch 3,
**dadurch gekennzeichnet,**
**dass** der erste Steuerabschnitt (18) eine Führungskontur (22) aufweist, die die Bereiche (24, 26) umfasst, wobei der zweite Steuerabschnitt (20) entlang der Führungskontur (22) bewegbar ist.

5. Greifereinheit (10) nach Anspruch 4,
**dadurch gekennzeichnet,**
**dass** die Führungskontur (22) in geschlossener Weise innerhalb des Greifers (14) verläuft, wobei der erste Bereich (24) insbesondere gegenüberliegend zu dem zweiten Bereich (26) an dem ersten Steuerabschnitt (18) ausgebildet ist, wobei der zweite Steuerabschnitt (20) vorzugsweise mit einem Fortsatz (21) auf der Führungskontur bewegbar ist.

6. Greifereinheit (10) nach einem der vorhergehenden Ansprüche,
**dadurch gekennzeichnet,**
**dass** der erste Steuerabschnitt (18) langlochartig entlang einer Längsrichtung des Greifers (14) ausgebildet ist.

7. Greifereinheit (10) nach einem der vorhergehenden Ansprüche,
**dadurch gekennzeichnet,**
**dass** die Greifer (14) ein freies Ende (28) aufweisen, wobei das Stellglied (16) entlang einer Fügerichtung (1) des Gegenstandes (12) in die Greifereinheit (10) beweglich ist.

8. Greifereinheit (10) nach einem der Ansprüche 3 bis 7,
**dadurch gekennzeichnet,**
**dass** wenigstens einer der Bereiche (24, 26) bezüglich der Bewegungsrichtung des Stellgliedes (16) verkippt und/oder gekrümmt ist.

9. Greifereinheit (10) nach einem der vorhergehenden Ansprüche,
**dadurch gekennzeichnet,**
**dass** ein Kontaktrand (30) des Stellglieds (16) in einer Ebene mit einem Kontaktrand (32) des Greifers (14) liegt, wobei die Ebene parallel zur oder in der Ebene der Bewegung des Greifers (14) liegt.

10. Greifereinheit (10) nach einem der vorhergehenden Ansprüche,
**dadurch gekennzeichnet,**
**dass** die Greifer (14) eingerichtet sind, um eine Schwenkbewegung (3) zum Greifen des Gegenstands (12) auszuführen, wobei die Schwenkbewegung (3) durch eine Linearbewegung (2) des Stellglieds (16) antreibbar ist, sodass insbesondere ein Gegenstand (12) mit einem von einer Kreisform abweichenden Querschnitt greifbar ist.

11. Greifereinheit (10) nach einem der Ansprüche 2 bis 10,
**dadurch gekennzeichnet,**
**dass** das Stellglied (16) mit einer Stange (34) des Aktuators (15) und wenigstens einer dazu parallelen Führungsachse (36) verbunden ist.

12. Vorrichtung (100) zum Greifen eines Gegenstands (12) umfassend eine Greifereinheit (10) nach einem der vorhergehenden Ansprüche,
**dadurch gekennzeichnet,**
**dass** wenigstens zwei Greifereinheiten (10) zu einer Greiferdoppeleinheit (102) übereinander angeordnet sind, wobei freie Enden (28) der Greifer (14) der beiden Greifereinheiten (10) in die gleiche Richtung weisen.

13. Vorrichtung (100) nach Anspruch 12,
**dadurch gekennzeichnet,**
**dass** wenigstens zwei Greiferdoppeleinheit (102) bezüglich einer Rotationsachse (4) in unterschiedliche Richtungen sternförmig radial abstehend ausgerichtet sind.

14. Vorrichtung (100) nach Anspruch 12 oder 13,
**dadurch gekennzeichnet,**
**dass** ein Abstand (D) der Greifereinheiten (10) einer Greiferdoppeleinheit (102) entlang der Rotationsachse (4) zueinander verstellbar ist.

## Claims

1. Gripper unit (10) for gripping an article (12), especially a container, comprising two grippers (14) and an actuating element (16), wherein the grippers (14) are in operative connection with the actuating element (16), so that they can be set in motion simultaneously for gripping the article (12), the grippers (14) each having a first control portion (18) and the actuating element (16) having a second control portion (20) which is displaceable along the first control portion (18), **characterised in that**
the actuating element (16) is positioned between the grippers (14) and the grippers (14) and the actuating element (16) define an opening (11) into which the article (12) is insertable in an insertion direction, with the result that the article (12) is fixable at three points by the grippers (14) and the actuating element (16).

2. Gripper unit (10) according to claim 1,
**characterised in that**
the actuating element is connected to an actuator (15), especially a pneumatic, hydraulic, mechanical or electrical actuator, which actuator (15) drives the simultaneous movement.

3. Gripper unit (10) according to either one of the preceding claims, **characterised in that**
the first control portion (18) has at least a first region (24) via which an opening force (O) for an opening movement of the gripper (14) is receivable, and a second region (26) via which a closing force (S) for a closing movement of the gripper (14) is receivable.

4. Gripper unit (10) according to claim 3,
**characterised in that**
the first control portion (18) has a guide contour (22) which comprises the regions (24, 26), the second control portion (20) being movable along the guide contour (22).

5. Gripper unit (10) according to claim 4,
**characterised in that**
the guide contour (22) is closed and runs within the gripper (14), the first region (24) being formed especially opposite the second region (26) on the first control portion (18), the second control portion (20) preferably being movable on the guide contour by means of a projection (21).

6. Gripper unit (10) according to any one of the preceding claims,
**characterised in that**
the first control portion (18) is formed like a slot along a longitudinal direction of the gripper (14).

7. Gripper unit (10) according to any one of the preceding claims,
**characterised in that**
the grippers (14) have a free end (28), the actuating element (16) being movable into the gripper unit (10) along an insertion direction (1) of the article (12).

8. Gripper unit (10) according to any one of claims 3 to 7,
**characterised in that**
at least one of the regions (24, 26) is tilted and/or curved with respect to the direction of movement of the actuating element (16).

9. Gripper unit (10) according to any one of the preceding claims,
**characterised in that**
a contact edge (30) of the actuating element (16) lies in the same plane as a contact edge (32) of the gripper (14), which plane lies parallel to or in the plane of the movement of the gripper (14).

10. Gripper unit (10) according to any one of the preceding claims,
**characterised in that**
the grippers (14) are configured to perform a pivoting movement (3) for gripping the article (12), which pivoting movement (3) is drivable by a linear movement (2) of the actuating element (16) so that, in particular, an article (12) having a cross-section departing from a circular shape can be gripped.

11. Gripper unit (10) according to any one of claims 2 to 10,
**characterised in that**
the actuating element (16) is connected to a rod (34) of the actuator (15) and to at least one guide shaft (36) parallel thereto.

12. Device (100) for gripping an article (12), comprising a gripper unit (10) according to any one of the preceding claims,
**characterised in that**
at least two gripper units (10) are arranged one above the other to form a double gripper unit (102), with free ends (28) of the grippers (14) of the two gripper units (10) pointing in the same direction.

13. Device (100) according to claim 12,
**characterised in that**
at least two double gripper units (102) are aligned so as to project radially in different directions with respect to a rotational axis (4) to form a star shape.

14. Device (100) according to claim 12 or 13,
**characterised in that**
a spacing (D) between the gripper units (10) of a double gripper unit (102) is adjustable relative to one another along a rotational axis (4).

## Revendications

1. Unité de préhension (10) conçue pour saisir un objet (12), en particulier un récipient, comprenant deux mors (14) et un organe de réglage (16), les mors (14) étant en liaison opérante avec l'organe de réglage (16) de façon telle qu'ils puissent être mus en simultanéité, afin de saisir l'objet (12), lesdits mors (14) et ledit organe de réglage (16) étant munis, respectivement, d'une première zone de commande (18) et d'une seconde zone de commande (20) apte à coulisser le long de ladite première zone de commande (18),
**caractérisée par le fait**
**que** l'organe de réglage (16) est mis en place entre les mors (14), et lesdits mors (14) et ledit organe de réglage (16) délimitent une ouverture (11) dans laquelle l'objet (12) peut être inséré, dans une direction d'insertion (1), de telle manière que ledit objet (12) puisse être bloqué à demeure, en trois points, par l'intermédiaire desdits mors (14) et dudit organe de réglage (16).

2. Unité de préhension (10) selon la revendication 1,
**caractérisée par le fait**
**que** l'organe de réglage (16) est relié à un actionneur (15) notamment pneumatique, hydraulique, mécanique ou électrique, lequel actionneur (15) entraîne le mouvement simultané.

3. Unité de préhension (10) selon l'une des revendications précédentes,
**caractérisée par le fait**
**que** la première zone de commande (18) comporte au moins une première région (24) par l'intermédiaire de laquelle peut être absorbée une force d'ouverture (O) dévolue à un mouvement d'ouverture du mors (14), et une seconde région (26) par l'intermédiaire de laquelle peut être absorbée une force de fermeture (S) dévolue à un mouvement de fermeture dudit mors (14).

4. Unité de préhension (10) selon la revendication 3,
**caractérisée par le fait**
**que** la première zone de commande (18) est dotée d'un profil de guidage (22) incluant les régions (24, 26), la seconde zone de commande (20) étant mobile le long dudit profil de guidage (22).

5. Unité de préhension (10) selon la revendication 4,
**caractérisée par le fait**
**que** le profil de guidage (22) présente un tracé fermé à l'intérieur du mors (14), la première région (24) étant notamment ménagée à l'opposé de la seconde région (26) au niveau de la première zone de commande (18), sachant que, de préférence, la seconde zone de commande (20) est mobile sur le profil de guidage au moyen d'un appendice (21).

6. Unité de préhension (10) selon l'une des revendications précédentes,
**caractérisée par le fait**
**que** la première zone de commande (18) est de réalisation du type trou oblong le long d'une direction longitudinale du mors (14).

7. Unité de préhension (10) selon l'une des revendications précédentes,
**caractérisée par le fait**
**que** les mors (14) présentent une extrémité libre (28), l'organe de réglage (16) étant mobile le long d'une direction (1) d'insertion de l'objet (12) dans ladite unité de préhension (10).

8. Unité de préhension (10) selon l'une des revendications 3 à 7,
**caractérisée par le fait**
**qu'**au moins l'une des régions (24, 26) est inclinée et/ou curviligne par rapport à la direction de mouvement de l'organe de réglage (16).

9. Unité de préhension (10) selon l'une des revendications précédentes,
**caractérisée par le fait**
**qu'**un bord de contact (30) de l'organe de réglage (16) se trouve dans un plan avec un bord de contact (32) du mors (14), ledit plan étant parallèle au plan du mouvement dudit mors (14), ou situé dans ledit plan.

10. Unité de préhension (10) selon l'une des revendications précédentes,
**caractérisée par le fait**
**que** les mors (14) sont agencés pour accomplir un mouvement pivotant (3), en vue de saisir l'objet (12), lequel mouvement pivotant (3) peut être stimulé par un mouvement linéaire (2) de l'organe de réglage (16), ce qui permet, en particulier, de saisir un objet (12) présentant une section transversale qui diffère d'une forme circulaire.

11. Unité de préhension (10) selon l'une des revendications 2 à 10,
**caractérisée par le fait**
**que** l'organe de réglage (16) est relié à une tige (34) de l'actionneur (15), et au moins à un axe de guidage (36) parallèle à ladite tige.

12. Dispositif (100) destiné à saisir un objet (12), incluant une unité de préhension (10) conforme à l'une des revendications précédentes,
**caractérisé par le fait**
**qu'**au moins deux unités de préhension (10) sont agencées en superposition pour former une unité de préhension double (102), des extrémités libres (28) des mors (14) des deux unités de préhension (10) pointant dans la même direction.

13. Dispositif (100) selon la revendication 12,
**caractérisé par le fait**
**qu'**au moins deux unités de préhension doubles (102) sont orientées dans des directions différentes par rapport à un axe de rotation (4), avec saillie en forme d'étoile dans le sens radial.

14. Dispositif (100) selon la revendication 12 ou 13,
**caractérisé par**
la faculté de réglage mutuel, le long de l'axe de rotation (4), d'une distance (D) séparant les unités de préhension (10) d'une unité de préhension double (102).
